Europäisches Patentamt

European Patent Office

Office européen des brevets

(11) Publication number: **0 022 967**
**B1**

# EUROPEAN PATENT SPECIFICATION

(45) Date of publication of patent specification: **24.10.84**

(21) Application number: **80103832.4**

(22) Date of filing: **04.07.80**

(51) Int. Cl.³: **C 08 F 236/10, C 08 F 212/08, C 09 J 7/02**

(54) **Styrene-butadiene alkyl methacrylate polymers as adhesives.**

(30) Priority: **23.07.79 US 59673**

(43) Date of publication of application:
**28.01.81 Bulletin 81/04**

(45) Publication of the grant of the patent:
**24.10.84 Bulletin 84/43**

(84) Designated Contracting States:
**DE FR GB**

(56) References cited:
**EP-A-0 016 403**
**DE-A-1 595 308**
**FR-A-2 245 712**
**GB-A- 998 773**
**US-A-2 649 425**
**US-A-3 639 500**
**US-A-3 970 629**
**US-E- 27 269**

(73) Proprietor: **POLYSAR INTERNATIONAL S.A.**
**P.O. Box 1063 Route de Beaumont 10**
**CH-1071 Fribourg (CH)**

(72) Inventor: **Ozari, Yehuda**
**9109 Linn Station Road**
**Louisville Kentucky 40222 (US)**
Inventor: **Wotier, Edward J.**
**2934 Old Britain Circle**
**Chattanooga, Tenn. 37421 (US)**
Inventor: **Barabas, Eugene S.**
**41 Stanie Brae Drive**
**Watchung New Jersey 07060 (US)**

(74) Representative: **Patentanwälte Grünecker, Dr. Kinkeldey, Dr. Stockmair, Dr. Schumann, Jakob, Dr. Bezold, Meister, Hilgers, Dr. Meyer-Plath**
**Maximilianstrasse 58**
**D-8000 München 22 (DE)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

## Description

The present invention relates to a method of adhering an adherend to a substrate with a styrene-butadiene based pressure sensitive adhesive comprising coating the adherend with the adhesive and contacting the adherend and the substrate.

Styrene-butadiene polymers are essentially synthetic rubbers which are used extensively in the manufacture of industrial products, particularly tires and other products where natural rubber has previously been employed. Among the various uses of these polymers are uses as adhesives and binders for household, furniture, textile, medical and like applications where these polymers have been found effective due to their unique combination of properties.

One major drawback of styrene-butadiene polymers for pressure sensitive adhesive applications, has been their inability to readily flow and adhere themselves to a surface upon application of pressure. This inability to readily flow also limits the flexibility of the bond formed between the two materials and thus to some extent limits the applications for which these adhesives can be employed. In particular, it was found that medical applications which require good adhesive strength and insensitivity to water, yet require the adhesive to form a flexible bond, were foreclosed due to the inherent properties of the styrene-butadiene polymers available.

DE—A 15 95 308 is concerned with dispersions of polymers and their use as a binding agent for coatings. These dispersions of copolymers influence the viscosity of the coating in a positive way. If caseine, a common additive to coatings consisting of aqueous dispersions, is added to the coating, it results in an initial increase of viscosity, whereas a further addition of caseine results in a decrease of viscosity. US—E 27 269 discloses an adhesive composition, in which a modifier may be used. US—A26 49 425 discloses pressure sensitive adhesives. The polymeric component of the adhesive is limited to styrene and butadiene copolymers.

It is an object of the present invention to provide a method for preparing a particularly effective pressure sensitive adhesive comprising an improved styrene-butadiene polymer which has improved properties of flow under pressure while maintaining good adhesive strength, to help them function.

These and other objects are accomplished according to the present invention by a method of adhering an adherend to a substrate with a styrene-butadiene based pressure sensitive adhesive comprising coating the adherend with the adhesive and contacting the adherend and the substrate characterized in that the adhesive component of the pressure sensitive adhesive comprises the random emulsion polymerization product of monomeric mixture comprising, on a weight percent basis, at least 20% styrene, at least 40% butadiene, from 2 to 12% of a $C_{1-18}$ alkyl methacrylate and from 0 to 5% of a copolymerizable carboxylic acid, which monomers have been polymerized in the presence of from 0.4 to 2% based on the weight of the monomers of a chain transfer agent.

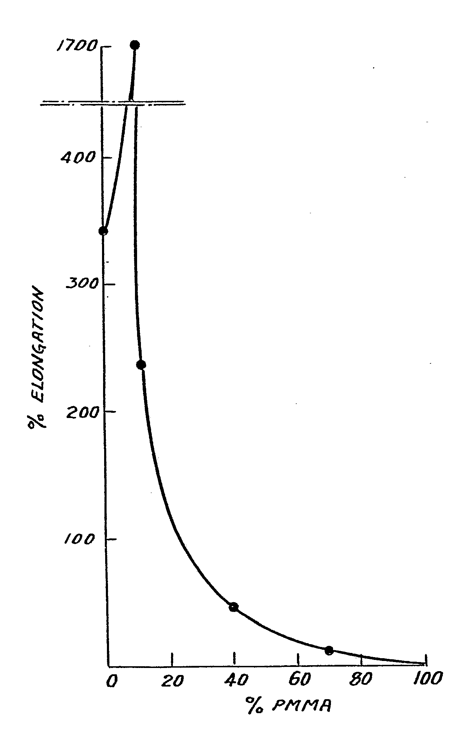

The invention will become better understood and its advantages more apparent from the following detailed description, especially when read in light of the attached drawing wherein:

The figure is a graph showing the variation of percent elongation with percent of methyl methacrylate units in a styrene-butadiene-methyl methacrylate terpolymer.

The preparation of the styrene-butadiene copolymer itself can be effected in accordance with prior art procedures, such as the one described in Bovey et al. Emulsion Polymerization, 1955, Interscience Publishers, Inc., New York, Pg 325. The disclosure of this reference is accordingly incorporated by reference for the disclosure of the typical processing conditions for the preparation of styrene-butadiene copolymers. The copolymer used in the present invention differs from the teachings of this reference, primarily and importantly by the inclusion of a specific level of alkyl methacrylate monomer which improves the ability of the resulting polymers to flow under pressure, making them especially adaptable for use as pressure sensitive adhesives.

Reference to the figure will show that for a styrene-butadiene polymer containing varying percentages of methyl methacrylate monomer in the polymerized product, the percent elongation has an unexpected peak at from between about 2 to 12% by weight of the methyl methacrylate. Because it is typical for the properties of the styrene-butadiene to vary gradually depending upon the relative monomer percentages, it is totally unexpected that the sharp increase in percent elongation would occur at this specific narrow range of alkyl methacrylate monomer inclusion. This is particularly true where it is realised that the methyl methacrylate has a relatively high glass transition temperature, Tg, as compared to the styrene-butadiene copolymer itself. Thus, it is quite surprising that a monomer capable of forming a high Tg polymer would provide an improvement in the pressure-flow properties of a styrene-butadiene polymer which it is polymerized with.

It is believed that the non-homogenous nature of the terpolymer provides improved cohesive strength. This is quite unexpected in view of the improved adhesive strength of the compositions and the ordinary tendency of polymers to lose cohesive strength as their adhesive ability increases. Were one to simply form a polymer low in styrene without the use of the alkyl methacrylate monomer, the results would not be as good as those obtained according to this invention because the cohesive strength of the polymer would be unduly reduced. Moreover, the use of the alkyl methacrylate enables processing to be accomplished at reduced pressure.

The particular styrene-butadiene rubber composition employed in preparing the graph shown in the figure, at 0% methyl methacrylate monomer, contained 45% butadiene, 52.5% styrene and 2—5% itaconic acid. This same relative percentage of these monomers was maintained as the methyl methacrylate monomer was increased.

The styrene-butadiene copolymer used in the present invention is prepared from a mixture of monomers comprising at least 20% styrene, at least 40% butadiene, and from 2 to 12%, based on the combined weight of the monomers, of an alkyl methacrylate having from 1 to 18 carbon atoms. The composition can also optionally include a copolymerizable carboxylic acid in an amount which preferably ranges from 1 to 5% based on the weight of the monomers. The excellent properties of the pressure sensitive adhesive of the invention are attributed to the proper balance of the ingredients.

The cohesive character of the polymer is due to the styrene-butadiene moiety. This, however, is sterically modified by the alkyl methacrylate units, so that the polymers flow under pressure. The acid groups, and probably also the methacrylate groups, assure a tight bond.

Particularly preferred among the alkyl methacrylates are those wherein the alkyl group comprises a member selected from the group consisting of methyl and stearyl. While the advantages of the invention can be obtained with levels of alkyl methacrylate within the range of 2 to 12% based on the weight of polymerized monomers, it is preferred to employ from 4 to 10% by weight on this same basis for a combination of good physical properties at an economical cost.

The amount of styrene and butadiene monomers based on the combined weight of the monomers in the polymerized material are not critical within the ranges specified with regard to the obtainment of the improved properties obtained according to the present invention. However, for many pressure sensitive adhesive applications which are intended to be utilized under ambient temperature conditions, it has been found that levels of styrene of from 20 to 60%, and levels of butadiene of from 40 to 80%, are suitable. More preferably, the styrene will be present in an amount of 35% to 45% and the butadiene will be present in an amount of from 55% to 65%, based on the total weight of the monomers. Varying the percentage of styrene above this preferred range will result in a less-flowing polymer, whereas varying the percentage below this range will result in a polymer having more adhesive properties but less cohesive properties.

According to the most preferred embodiment of the invention, the composition will be prepared from a monomer mixture which further comprises a copolymerizable carboxylic acid. This carboxylic acid will preferably be present in an amount of from 1 to 5% based on the weight of the monomers. While any of these copolymerizable carboxylic acids known to the art for improving the cohesive strength of styrene-butadiene copolymers can be employed, it is preferred to employ a member selected from the group consisting of methacrylic acid, itaconic acid and combinations of these.

One preferred procedure for preparing the copolymers used in this invention is set forth in the following Examples. It is to be understood, however, that other procedures and variations of the exemplary procedure can be employed. In addition to the presence of the monomers as previously discussed, the obtainment of the improved properties according to the invention also depends on the use of an effective amount of a chain transferring agent such as tertiary dodecyl mercaptan, other mercaptans and alcohols and terpenes known to be effective. Typically, the effective range of use will be in an amount of from 0.4 to 2% based on the total weight of monomers, in case of the tertiary dodecyl mercaptan. The chain transfer agent affects the molecular weight of the polymer. Where too little is employed, the molecular weight will be too high; and where too much is employed the adhesion is good, but the material will not have the cohesive character necessary. Where the cohesive strength is low, the adhesive itself will lack the proper cohesive power to resist being pulled apart.

To improve the stability of the resulting polymers against degradation, the additives in the art for controlling various types of degradation can be included in the final adhesive composition as desired. Also included in the final adhesive composition may be solvents or dispersants to improve initial spreadability for applying thin layers, and fillers or extenders such as talc, $CaCO_3$, silicates and the like. Further, any of the other well known additives can also be employed.

There is a need in medical applications for a textile-to-textile binder for dressings, tapes and bandages which gives a strong, flexible bond. Such material should also be resistant to water and maintain its adhesive and other physical properties for extended periods of time. Due to the heat sensitive nature of the substrates typically employed for these applications, the adhesive binding should preferably be brought about at room temperature under pressure. Prior to the present invention, there was no single adhesive that would satisfy all of these requirements. It is now possible, however, to meet this particular set of requirements.

The following Examples are presented for the purpose of further illustrating and explaining the present invention. Unless otherwise indicated, all parts and percentages are by weight.

Example I

This example describes the preparation of an improved styrene-butadiene polymer according to the present invention, prepared from styrene, butadiene, itaconic acid, methacrylic acid and stearyl methacrylate. The materials shown in Table I are sequentially charged into a 3.8 l. high pressure kettle equipped with a mechanical stirrer, thermometer, pressure gauge and three charging inlets:

TABLE I

| Charge No. | Ingredients | % in $H_2O$ | Weight |
|---|---|---|---|
| A-1 | Water (distilled) | — | 916 |
| | Hampene* 100 EDTA (chelating agent) | 38 | 2.2 |
| | Itaconic acid | — | 12.0 |
| | Monawet MB-45* diisobutyl sodium sulfo succinate (surfactant) | 45 | 10.7 |
| | SBR seed latex | 42 | 87.0 |
| A-2 | Water (distilled) | — | 50.0 |
| | Ammonium persulfate | — | 2.4 |
| B-1 | Water (distilled) | — | 215.0 |
| | Sodium hydroxide | 20 | 18.0 |
| | Ammonium persulfate | — | 6.0 |
| | Monawet MB-45* diisobutyl sodium sulfo succinate (surfactant) | 45 | 10.8 |
| B-2 | Styrene | — | 540.0 |
| | Butadiene | — | 612.0 |
| | Methacrylic acid | — | 12.0 |
| | Stearyl methacrylate | — | 24.0 |
| | Tertiary dodecyl mercaptan | — | 12.0 |

*Registered Trademark

These materials are added and processed in the following stagewise procedure:

(1) Charge A-1 is added to the kettle
(2) The kettle is purged with nitrogen by first evacuating the kettle to a vacuum of 0.17 bars then breaking the vacuum with nitrogen, and building pressure up to 1.7 bars. This sequence is repeated twice.
(3) Agitation is started at 300 RPM.
(4) Temperature of the contents of the kettle is raised to 82°C in 20 minutes.
(5) When temperature reaches 82°C, the reaction is started by adding A-2 in one shot, and then

(6) Starting the Charges B-1 and B-2 from two separate inlets.
(7) Addition of B-1 and B-2 is completed in 4 hours, while maintaining temperature at 82°C.
(8) The emulsion is then held at 88°C for 2 hours prior to cooling.

Example II

This example describes the comparison of the polymer prepared in Example I to a series of polymers (IIA—IIG) prepared by the same procedure, varying only the amounts of monomers, latex seed and tertiary dodecyl mercaptan as shown in Table II below. The resulting polymers are then evaluated for peel strength and peak area. Peel strength is measured by casting a 1.5 mm layer of latex (50% solids) on a cotton fabric, allowing it to dry overnight at ambient conditions, and then compressing it with a second fabric on it under 700 bars.

Specimens of 2.5cm×10.2cm were peeled on the Instron by the T Peel Test. Peak area was obtained by measuring the area under the peak plotted in the peel test.

0 022 967

TABLE II
Components—% based on total monomer weight

| Sample | Styrene | Butadiene | Itaconic acid | Tertiary dodecyl mercaptan | Seed | Stearyl meth-acrylate | Peel strength (kg/2.54 cm) | Peak area (g/cm$^2$) |
|---|---|---|---|---|---|---|---|---|
| Example | | | | | | | | |
| I | 45 | 51 | 1.0 | 1.0 | 3.0 | 2.0 | 45.3 | 5250 |
| IIA | 55 | 41 | 1.0 | 1.0 | 3.0 | 2.0 | 18.2 | 3500 |
| IIB | 45 | 49 | 1.0 | 1.0 | 3.0 | 4.0 | 62 | 6830 |
| IIC | 55 | 39 | 1.0 | 1.0 | 3.0 | 4.0 | 45.3 | 5790 |
| IID | 45 | 51 | 1.0 | 2.0 | 3.0 | 2.0 | 8.2 | 2100 |
| IIE | 55 | 40 | 1.0 | 2.0 | 3.0 | 4.0 | 20.4 | 4200 |
| IIF | 45 | 49 | 1.0 | 2.0 | 3.0 | 4.0 | 15.9 | 3150 |
| IIG | 55 | 39 | 1.0 | 2.0 | 3.0 | 4.0 | 25.0 | 5430 |

Example III

This example describes the preparation of another improved styrene-butadiene polymer according to the present invention, similar to that in Example I but employing methyl methacrylate monomer instead of the stearyl methacrylate. The materials shown in Table III are sequentially charged into a 3.8 l high pressure reactor of the type described in Example I:

TABLE III

| Charge No. | Ingredients | Weight (g) |
|---|---|---|
| A-1 | Water (distilled) | 854.4 |
| | Hampene 100* EDTA (chelating agent) | 2.2 |
| | Itaconic acid | 12.0 |
| | Monawet MB-45* diisobutyl sodium sulfo succinate (surfactant) | 10.7 |
| | Seed latex | 116.0 |
| A-2 | Water (distilled | 50.0 |
| | Ammonium persulfate | 3.6 |
| B-1 | Water (distilled) | 215.0 |
| | Sodium hydroxide | 18.0 |
| | Ammonium persulfate | 8.4 |
| | · Monawet MB-45* diisobutyl sodium sulfo succinate (surfactant) | 10.7 |
| B-2 | Styrene | 540.0 |
| | Butadiene | 554.4 |
| | Methacrylic acid | 18.0 |
| | Methyl methacrylate | 36.0 |
| | Tertiary dodecyl mercaptan | 7.2 |

*Registered Trademark

These materials are added and processed in the following stagewise procedure:

(1) Charge A-1 is added to the kettle.

(2) The kettle is purged with nitrogen by first evacuating the kettle to a vacuum of 0.17 bars then breaking the vacuum with nitrogen, and building pressure up to 1.7 bars. This sequence is repeated twice.

(3) Agitation is started at 300 RPM.

(4) Temperature of the contents of the kettle is raised to 82°C in 20 minutes.

(5) When temperature reaches 82°C, the reaction is started by adding A-2 in one shot, and then

(6) Starting the Charges B-1 and B-2 from two separate inlets

(7) Addition of B-1 and B-2 is completed in 4 hours.

(8) The emulsion is then held at 88°C for 2 hours prior to cooling.

Example IV

This example describes the comparison of the polymer prepared in Example III to a series of polymers (IVA—IVG) prepared by the same procedure, varying only the amounts of monomers, latex seed and tertiary dodecyl mercaptan as shown in Table IV below. The resulting polymers are then evaluated for peel strength and peak area as described in Example II. The results are shown in Table IV.

TABLE IV

Components—% based on total monomer weight

| Sample | Styrene | Butadiene | Itaconic acid | Tertiary dodecyl mercaptan | Seed | Methyl methacrylate | Peel strength (kg/2.54 cm) | Peak area (g/cm²) |
|---|---|---|---|---|---|---|---|---|
| Example | | | | | | | | |
| III | 45 | 46.2 | 1.0 | 0.6 | 4.0 | 3.0 | 4.5 | 703 |
| IVA | 40 | 51.7 | 1.0 | 1.0 | 3.0 | 3.0 | 15.4 | 1050 |
| IVB | 45 | 45.4 | 1.0 | 0.6 | 3.0 | 5.0 | 27.2 | 4570 |
| IVC | 45 | 46.1 | 1.5 | 1.0 | 4.0 | 3.0 | 18.1 | 2280 |
| IVD | 45 | 44.2 | 1.0 | 1.0 | 3.0 | 5.0 | 72.8 | 8750 |
| IVE | 40 | 49.1 | 1.0 | 1.0 | 4.0 | 5.0 | 63.6 | 8930 |
| IVF | 40 | 49.5 | 1.5 | 0.6 | 4.0 | 5.0 | 5.9 | 1050 |
| IVG | 40 | 51.4 | 1.5 | 0.6 | 3.0 | 3.0 | 4.5 | 1405 |
| IVH | 45 | 45.4 | 1.0 | 0.8 | 3.0 | 5.0 | 72.8 | 10050 |

## Claims

1. A method of adhering an adherend to a substrate with a styrene-butadiene based pressure sensitive adhesive comprising coating the adherend with the adhesive and contacting the adherend and the substrate characterized in that the adhesive component of the pressure sensitive adhesive comprises the random emulsion polymerization product of a monomeric mixture comprising, on a weight percent basis, at least 20% styrene, at least 40% butadiene, from 2 to 12% of $C_{1-18}$ alkyl methacrylate and from 0 to 5% of a copolymerizable carboxylic acid, which monomers have been polymerized in the presence of from 0.4 to 2% based on the weight of the monomers of a chain transfer agent.

2. The method of claim 1, wherein said monomer mixture comprises from 20 to 60% styrene and from 40 to 80% butadiene based on the combined weight of monomers.

3. The method of claim 1 or 2, said monomer mixture comprises from 1 to 5% carboxylic acid.

4. The method of any of claims 1—3, wherein said monomer mixture comprises 4 to 10% $C_{1-18}$ alkyl methacrylate.

5. The method of any of claims 1—4, wherein said chain transfer agent is tertiary-dodecyl mercaptan.

## Patentansprüche

1. Verfahren zum Ankleben eines Adhärens an ein Substrat mittels eines druckempfindlichen Klebstoffs auf Styrol-Butadien-basis, umfassend das Beschlichten des Adhärens mit derm Klebstoff und in Berührung bringen des Adhärens und des Substrats, dadurch gekennzeichnet, daß die Klebstoffkomponente des druckempfindlichen Klebstoffs das zufallsverteilte Emulsionspolymerisationsprodukt einer monomeren Mischung, umfassend, bezogen auf Gew-%, mindestens 20% Styrol, mindestens 40% Butadien, 2 bis 12% eines $C_{1-18}$-Alkylmethacrylats und 0 bis 5% einer copolymerisierbaren Karbonsäure, umfaßt, wobei die Monomeren in Gegenwart von 0,4 bis 2%, bezogen auf das Gewicht der Monomeren, eines Kettenübertragungsmittels polymerisiert worden sind.

2. Verfahren nach Anspruch 1, dadurch gekennzeichnet, daß die monomere Mischung 20 bis 60% Styrol und 40 bis 80% Butadien, bezogen auf das Gesamtgewicht der Monomeren, umfaßt.

3. Verfahren nach Anspruch 1 oder 2, dadurch gekennzeichnet, daß die monomere Mischung 1 bis 5% Karbonsäure umfaßt.

4. Verfahren nach einem der Ansprüche 1 bis 3, dadurch gekennzeichnet, daß die monomere Mischung 4 bis 10% $C_{1-18}$-Alkylmethacrylat umfaßt.

5. Verfahren nach einem der Ansprüche 1 bis 4, dadurch gekennzeichnet, daß das Kettenübertragungsmittel ein tert.-Dodecylmercaptan ist.

## Revendications

1. Procédé pour faire adhérer un adhérende à un substrat avec un adhésif sensible à la pression à base de styrène-butadiène, consistant à revêtir l'adhérende de l'adhésif et à mettre en contact l'adhérende et le substrat, caractérisé en ce que le composant adhésif de l'adhésif sensible à la pression est le produit de polymérisation en émulsion statistique d'un mélange monomérique comprenant, sur une base de pourcentages en poids, au moins 20% de styrène, au moins 40% de butadiène, 2 à 12% d'un méthacrylate d'alkyle en $C_1$ à $C_{18}$ et 0 à 5% d'un acide carboxylique copolymérisable, lesdits monomères ayant été polymérisés en présence de 0,4 à 2%, sur la base du poids des monomères, d'un agent de transfert de chaîne.

2. Procédé suivant la revendication 1, dans lequel le málange de monomères comprend 20 à 60 % de styrène et 40 à 80% de butadiène sur la base du poids total des monomères.

3. Procédé suivant la revendication 1 ou 2, dans lequel le mélange de monomères comprend 1 à 5% d'acide carboxylique.

4. Procédé suivant l'une quelconque des revendications 1—3 dans, lequel ledit mélange de monomères comprend 4 à 10% de méthacrylate d'alkyle en $C_1$ à $C_{18}$.

5. Procédé suivant l'une quelconque des revendications 1—4, dans lequel agent de transfert de chaîne le tertio-dodécylmercaptan.